# EUROPEAN PATENT APPLICATION

(11) **EP 4 726 871 A1**
(43) Date of publication of application: **15.04.2026**
(21) Application number: 24845894.5
(22) Date of filing: 16.07.2024
(51) Int. Cl.: H01M 50/116, H01M 10/42, H01M 50/126, H01M 50/105, H01M 10/052, H01M 50/124, A62D 1/00, A62C 3/16

(54) **POUCH-TYPE BATTERY CASE AND LITHIUM SECONDARY BATTERY COMPRISING SAME**

(30) Priority: 27.07.2023 KR 20230098547; 10.07.2024 KR 20240091404
(71) Applicant: LG Energy Solution, Ltd., Seoul 07335 (KR)
(72) Inventor: KANG, Gyung Soo, Daejeon 34122 (KR); HONG, Eui Jin, Daejeon 34122 (KR); YU, Hyung Kyun, Daejeon 34122 (KR)
(74) Representative: Plasseraud IP
(86) International application number: PCT/KR2024/010142
(87) International publication number: WO 2025/023591

(57) **Abstract**

A pouch-type battery case according to the present invention includes a base layer, a gas barrier layer, and a sealant layer which are sequentially stacked, wherein the sealant layer includes a particle-type fire extinguishing agent, wherein the particle-type fire extinguishing agent includes one or more selected from the group consisting of a first fire extinguishing component containing sodium hydrogen carbonate, a second fire extinguishing component containing calcium hydrogen carbonate, a third fire extinguishing component containing ammonium phosphate, and a fourth fire extinguishing component containing urea, so that it is possible to provide a pouch-type battery case with improved safety.

## Description

### TECHNICAL FIELD

The present invention relates to a pouch-type battery case and a lithium secondary battery including the same, and more particularly, to a pouch-type battery case with improved safety and a lithium secondary battery including the same.

### BACKGROUND ART

In general, types of a secondary battery include a nickel cadmium battery, a nickel hydrogen battery, a lithium ion battery, a lithium ion polymer battery, and the like. Such a secondary battery is applied and used in small products such as digital cameras, P-DVDs, MP3P, mobile phones, PDAs, portable game devices, power tools, and e-bikes, as well as large products that require high power such as electric vehicles and hybrid vehicles, and power storage devices for storing surplus generated power or renewable energy, and power storage devices for backup power.

In order to manufacture such a secondary battery, an electrode active material slurry is first applied on a positive electrode current collector and a negative electrode current collector to manufacture a positive electrode and a negative electrode, and the positive electrode and the negative electrode are stacked on both sides of a separator to form an electrode assembly having a predetermined shape. Then, the electrode assembly is received in a battery case, followed by injecting an electrolyte thereto, and sealing.

The secondary battery is classified into a pouch-type secondary battery, a can-type secondary battery according to the material of the case accommodating the electrode assembly. The pouch-type secondary battery accommodates the electrode assembly in a pouch made of a flexible polymer material. The can-type secondary battery accommodates the electrode assembly in a case made of a material such as a metal or plastic.

A pouch, which is a case of the pouch-type secondary battery, is manufactured by performing press processing on a flexible pouch film laminate body, thereby forming a cup portion. When the cup portion is formed, an electrode assembly is received in an accommodation space inside the cup portion and a sealing portion is sealed to manufacture a secondary battery.

In general, the pouch-type battery case is formed of a plurality of layers in which a polymer film such as polyethylene terephthalate is laminated on one surface of a gas barrier layer made of a metal, and a sealant layer is laminated on the other surface thereof. However, in the case of a typical pouch-type battery case, as the size is required to be increased due to the higher density and larger capacity of a battery, the molding depth has become deeper, which has led to a problem in which the tensile stress caused by a swelling phenomenon is large, and accordingly, the risk of explosion is increased.

### DISCLOSURE OF THE INVENTION

### TECHNICAL PROBLEM

In order to solve the above problem, the present invention provides a pouch-type battery case having improved safety by preventing thermal runaway and explosion by additionally including a solid-phase particle-type fire extinguishing agent in a film laminate structure of the pouch-type battery case in order to respond to the risk of explosion, thereby causing a fire extinguishing function early in the event of abnormal operation of a battery.

Problems to be solved by the present invention are not limited to the above-mentioned problem, and other problems that are not mentioned may be apparent to those skilled in the art from the following description.

### TECHNICAL SOLUTION

[1] A pouch-type battery case according to an embodiment of the present invention includes a base layer, a gas barrier layer, and a sealant layer which are sequentially stacked, wherein the sealant layer includes a particle-type fire extinguishing agent, wherein the particle-type fire extinguishing agent includes one or more selected from the group consisting of a first fire extinguishing component containing sodium hydrogen carbonate, a second fire extinguishing component containing calcium hydrogen carbonate, a third fire extinguishing component containing ammonium phosphate, and a fourth fire extinguishing component containing urea.
[2] In [1] above, the particle-type fire extinguishing agent may be included in an amount of 10 wt% to 90 wt% based on the total weight of the sealant layer.
[3] In [1] and/or [2] above, the particle-type fire extinguishing agent may be included as a particle-type fire extinguishing agent in the form of a filler in the sealant layer, and the particle-type fire extinguishing agent may have an average particle diameter D₅₀ of 1 µm or less.
[4] In any one or more among [1] to [3] above, the sealant layer may include a first sealant layer disposed to be in contact with a gas barrier layer, a fire extinguishing agent layer including the particle-type fire extinguishing agent and disposed to be in contact with the first sealant layer, and a second sealant layer disposed to be in contact with the fire extinguishing agent layer.
[5] In any one or more among [1] to [4] above, the pouch-type battery case may be provided with a cup portion having a recessed shape to receive an electrode assembly, and a sealing portion formed along the circumference of the cup portion, wherein the particle-type fire extinguishing agent may be included in a region excluding the sealing portion.
[6] In any one or more among [1] to [5] above, the particle-type fire extinguishing agent may be included in the cup portion spaced apart from the sealing portion by a width equal to or greater than a width of the sealing portion.
[7] In any one or more among [1] to [6] above, the base layer may have a multi-layered structure including two or more layers formed of different polymers from each other, and the particle-type fire extinguishing agent may further be included in one or more layers selected from the multiple layers.
[8] A lithium secondary battery according to another embodiment of the present invention includes the above-described pouch-type battery case, and an electrode assembly accommodated inside the pouch-type battery case.

### ADVANTAGEOUS EFFECTS

A pouch-type battery case according to an embodiment of the present invention may improve safety by preventing thermal runaway and explosion by additionally including a solid fire extinguishing component in a film laminate structure of the pouch-type battery case in order to respond to the risk of explosion, thereby causing a fire extinguishing function early in the event of abnormal operation of a battery.

Specifically, the pouch-type battery case includes a solid-phase particle-type fire extinguishing agent, and particularly, includes the solid-phase particle-type fire extinguishing agent in an inner layer of a pouch film laminate rather than a gas barrier layer, thereby causing a fire extinguishing function early in the event of abnormal behavior of a battery, and by applying a solid material, it is possible to prevent problems in advance, such as an extinguishing component of a lower case not being able to perform a fire extinguishing action and being leaked to the outside in the event of the abnormal behavior, or the extinguishing component penetrating into a pouch, thereby causing a side reaction with an electrolyte or a decrease in concentration, as in the case of a liquid fire extinguishing component which is more fluid than a solid one.

### BRIEF DESCRIPTION OF THE DRAWINGS

FIG. 1 is a cross-sectional view of a pouch-type battery case according to the present invention in which a particle-type fire extinguishing agent is included as a filler.
FIG. 2 is a plan view of a lithium secondary battery including a pouch-type battery case according to the present invention.
FIG. 3 is an exploded assembly view of the lithium secondary battery according to FIG. 2.
FIG. 4 is a plan view of a lithium secondary battery including a pouch-type battery case according to the present invention.
FIG. 5 is a vertical cross-sectional view illustrating the pouch-type battery case taken along line S-S' in FIG. 4.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

Hereinafter, preferred embodiments of the present invention will be described in detail with reference to the accompanying drawings.

In the present specification, when a portion is said to include a certain element, it means that the portion may further include another element rather than excluding another element unless otherwise stated.

In the present specification, the upper part of a drawing may be referred to as an "upper portion" or "upper side" of a configuration illustrated in the drawing, and the lower part thereof may be referred to as a "lower portion" or "lower side." In addition, in a drawing, the remaining portion except a portion between an upper portion and a lower portion of an illustrated configuration or the upper portion and the lower portion may be referred to as a "side portion" or "side surface." The above-described relative terms such as "upper portion," "upper side," and the like may be used to describe the relationship between components illustrated in a drawing, but the present disclosure is not limited by such terms.

In the present specification, a direction toward an inner space of one structure may be referred to as "inner side," a direction protruding to an open outer space may be referred to as "outer side." The above-described relative terms such as "inner side," "outer side," and the like may be used to describe the relationship between components illustrated in a drawing, but the present disclosure is not limited by such terms.

In the present specification, the description of "A and/or B" means A, or B, or A and B.

In the present specification, when a part is referred to as being connected to another part, it includes not only the case of being directly connected thereto but also the case of being connected thereto having another component therebetween.

In the present specification, the term "average particle diameter" refers to a particle diameter corresponding to an average value of weight percentage in a particle size distribution curve, and refers to wt% unless otherwise explicitly indicated. The average particle diameter may be measured using an electron microscope or optical microscope after cutting a sample of a pouch-type battery case.

In the present specification, each of the pouch-type battery case and the lithium secondary battery includes one or more of technical features and/or technical configurations to be described below, and the technical features and/or technical configurations may be combined in various ways.

### Pouch-type battery case

A pouch-type battery case according to an embodiment of the present invention includes a base layer, a gas barrier layer, and a sealant layer which are sequentially stacked, wherein the sealant layer includes a particle-type fire extinguishing agent, wherein the particle-type fire extinguishing agent includes one or more selected from the group consisting of a first fire extinguishing component containing sodium hydrogen carbonate, a second fire extinguishing component containing calcium hydrogen carbonate, a third fire extinguishing component containing ammonium phosphate, and a fourth fire extinguishing component containing urea.

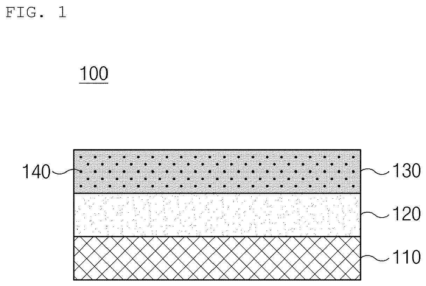

Hereinafter, referring to FIG. 1, a pouch-type battery case according to the present invention and each layer included in the pouch-type battery case will be described in detail.

FIG. 1 is a cross-sectional view of a pouch-type battery case 100 including a fire extinguishing component in a sealant layer, and illustrates a case in which a particle-type fire extinguishing agent is included as a filler.

As illustrated in FIG. 1, the pouch-type battery case 100 includes a base layer 110, a gas barrier layer 120, and a sealant layer 130.

### (1) Sealant layer including fire extinguishing component

The sealant layer 130 is to be bonded through thermal compression, thereby sealing a battery case, and is positioned in the innermost layer of the pouch-type battery case 100.

The sealant layer 130 is a surface in contact with an electrolyte and an electrode assembly after being molded into the battery case, and thus, is required to have insulation properties and corrosion resistance, and is required to completely seal the inside to block the movement of substances between the inside and the outside, and thus is required to have high sealing properties.

The sealant layer 130 may be made of a polymer material, and for example, may be made of one or more selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisazole, polyarylate, and Teflon, and among the above, it is particularly preferable that polypropylene (PP) is included, which has excellent mechanical properties such as tensile strength, stiffness, surface hardness, abrasion resistance, and heat resistance, and excellent chemical properties such as corrosion resistance.

The sealant layer 130 may include polypropylene, cast polypropylene (CPP), acid-modified polypropylene, a polypropylene-butylene-ethylene copolymer, or a combinations thereof.

The sealant layer 130 may have a single-layered structure, or may have a multi-layered structure including two or more layers composed of different polymer materials from each other.

The sealant layer may have a total thickness of 60 µm to 100 µm, preferably 60 µm to 90 µm, and more preferably 60 µm to 80 µm. If the sealant layer is too thin, the sealing durability and insulation properties may be reduced, and if too thick, the bendability may be reduced and the total thickness of the pouch film laminate body may increase, resulting in a decrease in energy density relative to volume.

The sealant layer 130 includes a particle-type fire extinguishing agent, and the particle-type fire extinguishing agent includes one or more selected from the group consisting of a first fire extinguishing component containing sodium hydrogen carbonate, a second fire extinguishing component containing calcium hydrogen carbonate, a third fire extinguishing component containing ammonium phosphate, and a fourth fire extinguishing component containing urea. Specifically, the particle-type fire extinguishing agent may include at least one selected from the group consisting of NaHCO₃, KHCO₃, NH₄H₂PO₄, and KC₂N₂H₃O₃. Preferably, the particle-type fire extinguishing agent may include NaHCO₃ and/or KHCO₃. In the event of a fire, the particle-type fire extinguishing agent may react with high heat, and may prevent the spread of the fire started inside and outside an electrode assembly.

The content of the particle-type fire extinguishing agent may be 10 wt% to 90 wt%, preferably 15 wt% to 75 wt%, and more preferably 25 wt% to 65 wt%, based on the total weight of the sealant layer.

If the content of the particle-type fire extinguishing agent is too low, the fire extinguishing effect may be reduced, and if the content is excessively high, the total thickness of a cell may increase due to an increase in the total thickness of a pouch-type battery case, which may rather reduce the energy density, and the moldability may be poor when molding a pouch film laminate.

A particle-type fire extinguishing agent 140 may have a spherical shape, a rod shape, or an atypical shape, and the shape thereof is not particularly limited, and the particle-type fire extinguishing agent 140 may be dispersed in the form of a filler in the sealant layer 130.

The particle-type fire extinguishing agent 140 may have an average particle diameter D₅₀ of 1.0 µm or less, preferably 0.1 µm to 0.8 µm, and more preferably 0.2 µm to 0.6 µm. The particle-type fire extinguishing agent 140 having a size of 1.0 µm or less may be applied in order to prevent the overall thickness of a cell from being excessively increased. By injecting a particle-type fire extinguishing agent into a polymer in a molten state when extruding a polymer forming a sealant layer, as a method of comprising the particle-type fire extinguishing agent in the pouch-type battery case, and the method is not particularly limited.

As a method for including a component for fire extinguishing in a pouch film laminate, a method such as forming a fire extinguishing agent layer and placing the same at a random position between the laminates, or injecting a fire extinguishing component into a capsule to form a separate layer and placing the layer at a random position between the laminates may be considered, and in the case of forming the separate layer with a fire extinguishing component, the overall thickness of the pouch film laminate inevitably increases, which may be a factor that deteriorates moldability, such as causing cracks in corners when drawing-molding the pouch film laminate into a case.

The increase in the thickness of the pouch film laminate may serve to prevent swelling of a battery caused by a gas generated therein, but in practice, since the prevention of the swelling should be controlled by an electrode assembly or electrolyte included inside the pouch, if the swelling is suppressed by increasing the thickness of the pouch film laminate, it only increases stress on the electrode assembly inside a pouch-type case, so that the pouch film laminate needs to be designed to allow swelling within a gap between battery cells in a battery pack. Therefore, any additional layers other than those required for layer configuration to function as a pouch film laminate are not desirable from a battery performance perspective.

In the case of forming the capsule, since the overall thickness of a pouch film increases by 50% or more, so that there may be a problem in which pouch moldability is significantly deteriorated. For example, during drawing-molding, there may be a problem in which the capsule bursts due to excessive tension applied to corners. On the other hand, the pouch-type battery case according to an embodiment of the present invention includes a particle-type fire extinguishing agent in a sealant layer, and is characterized by including a fire extinguishing agent is in a solid state. If a fire extinguishing component is solid, unlike a case of a liquid fire extinguishing component, there are advantages in that there is no possibility of a problem caused by a liquid phase penetrating from a sealant layer into a pouch and being mixed with an electrolyte, and there is no possibility of a fire extinguishing agent being leaked to the outside without performing a fire extinguishing action when a lower case is damaged in the event of abnormal behavior of a battery.

The pouch-type battery case includes the particle-type fire extinguishing agent in the sealant layer, and thus, may immediately cause a fire extinguishing action in the event of abnormal behavior of a battery to suppress heat generated in an early stage, thereby preventing an explosion caused by thermal runaway, so that the pouch-type battery case may greatly contribute to the improvement of safety. That is, if a fire extinguishing component is not disposed inside a pouch based on a gas barrier layer, for example, if the fire extinguishing component is not included in the sealant layer, but is included in a base layer thereoutside, the fire extinguishing action will only be performed after heat is sufficiently accumulated by the gas barrier layer. In this case, it is highly likely that energy has already increased too much to be suppressed by the fire extinguishing component, so that it may be difficult to prevent an explosion due to thermal runaway. Therefore, in order to cause a fire extinguishing action for suppressing an abnormal behavior phenomenon of a battery before thermal runaway occurs, it is preferable to include a particle-type fire extinguishing agent in a sealant layer, which is positioned in an inner layer rather than a gas barrier layer.

### (2) Gas barrier layer

The gas barrier layer 120 is stacked between the base layer 110 and the sealant layer 130 to secure mechanical strength of a pouch, block the entry of a gas, moisture, or the like from the outside of the pouch-type battery case, and prevent the leakage of an electrolyte from the inside of the pouch-type battery case.

The gas barrier layer 120 may be formed of a metal, and specifically, may be formed of an aluminum alloy thin film. If the gas barrier layer is formed by using an aluminum alloy thin film, it is possible to secure mechanical strength of a predetermined level or more, lighten the weight, complement electrochemical properties of an electrode assembly and an electrolyte, secure heat dissipation, and the like. The aluminum alloy thin film may include a metal element other than aluminum, for example, one or two or more selected from the group consisting of iron (Fe), copper (Cu), chromium (Cr), manganese (Mn), nickel (Ni), magnesium (Mg), silicon (Si), and zinc (Zn).

The thickness of the gas barrier layer 120 may be 40 µm to 100 µm, specifically 50 µm to 90 µm, and more specifically 55 µm to 85 µm. If the thickness of the gas barrier layer satisfies the above-described ranges, moldability and gas barrier performance are excellent when molding a cup portion.

### (3) Base layer

The base layer 110 is formed on the outermost layer of a pouch film laminate 100 to protect a secondary battery from external friction and collision. The base layer 110 is made of a polymer to electrically insulate an electrode assembly from the outside. The base layer 110 may be made of one or more materials selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon, and glass fiber. Among the above, the base layer 110 may be made of polyethylene terephthalate (PET), nylon, or a combination thereof having wear resistance and heat resistance.

The base layer 110 may have a single-layered structure having a single layer formed of one material. Alternatively, the base layer 110 may have a multi-layered structure in which two or more materials respectively form layers.

The thickness of the base layer 110 may be 5 µm to 50 µm, specifically 7 µm to 50 µm, and more specifically 7 µm to 40 µm. If the thickness of the base layer 110 satisfies the above-described ranges, the pouch film laminate may have excellent external insulation properties, and the entire pouch is not thick, so that energy density with respect to the volume of a secondary battery may be excellent.

The base layer 110 may include a fire extinguishing component, and if the base layer 110 has a multi-layered structure, one or more layers selected from these layers may include the fire extinguishing component, and the fire extinguishing component may be included in the same form as that included in the sealant layer described above. In this case, there is an advantage of more reliably causing a fire extinguishing action if a battery case is damaged by an impact applied from the outside, other than a phenomenon of thermal runaway by an abnormal behavior of a battery inside the pouch.

The pouch-type battery case 100 as described above may be manufactured by a method for manufacturing a pouch-type battery case known in the art. For example, the pouch-type battery case of the present invention may be manufactured by attaching a base layer 110 to an upper surface of a gas barrier layer 120 by means of an adhesive, and forming a sealant layer 130 on a lower surface of the gas barrier layer 120 by means of co-extrusion or an adhesive layer, and a pouch film thus manufactured may be manufactured into a pouch-type battery case through cup molding, but the embodiment of the present invention is not limited thereto, and a method for including a particle-type fire extinguishing agent therein is the same as described above.

The pouch-type battery case may have a total thickness of 160 µm to 200 µm, preferably 180 µm to 200 µm. If the thickness of the pouch-type battery case satisfies the above-described ranges, it is possible to increase a molding depth while minimizing reduction in a battery accommodation space, degradation in sealing durability, and the like due to an increase in the thickness of the battery case.

### Lithium secondary battery

According to another embodiment of the present invention, there is provided a lithium secondary battery including the above-described pouch-type battery case, and an electrode assembly to be accommodated inside the pouch-type battery case.

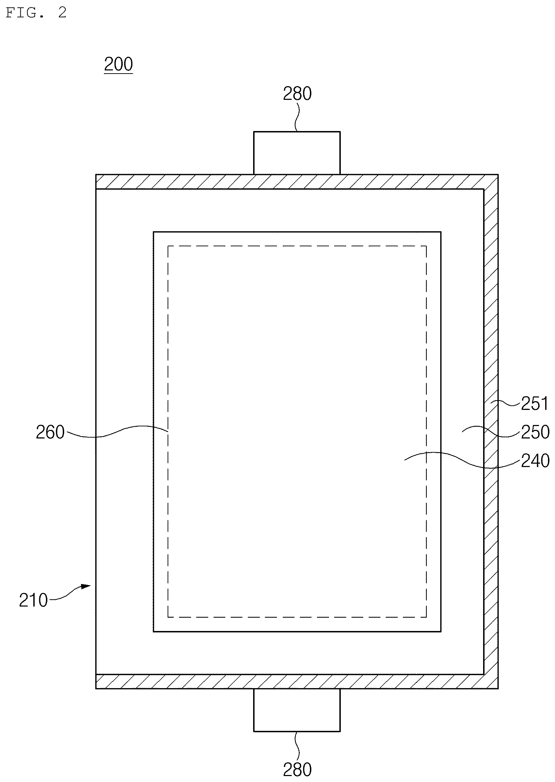

FIG. 2 is a plan view of an example of a lithium secondary battery 200 including a pouch-type battery case 210.

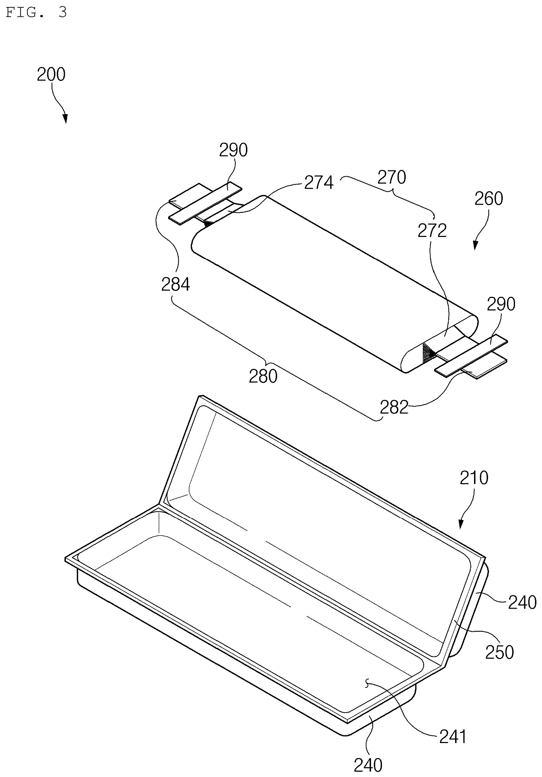

The pouch-type battery case 210 may include a cup portion 240 having a recessed shape to receive an electrode assembly 260, and a sealing portion 251 formed along the circumference of the cup portion 240. The sealing portion 251 is a region marked by a hatched pattern in FIG. 3, which is positioned in a terrace portion 250, and may be formed by sealing all or part of the terrace portion 250. In addition, the cup portion 240 may have a recessed shape by means of molding to receive the electrode assembly 260, and the electrode assembly may be electrically connected to an electrode tab, and the electrode tab may be electrically connected to an electrode lead 280 which is drawn to the outside.

FIG. 3 is an exploded assembly view of the lithium secondary battery 200 including the electrode assembly 260 according to FIG. 2 and the pouch-type battery case 210 in which the electrode assembly is accommodated.

As illustrated in FIG. 3, the lithium secondary battery 200 according to the present invention may include the pouch-type battery case 210, and the electrode assembly 260 to be accommodated in the pouch-type battery case 210. The electrode assembly 260 may be formed by stacking a positive electrode, a separator, and a negative electrode, and may include an electrode tab 270, the electrode lead 280, and a lead film 290. The lithium secondary battery 200 may be manufactured by injecting an electrolyte into the pouch-type battery case 210 in a state in which the electrode assembly 260 is received thereinside, and then sealing the terrace portion 250.

The pouch-type battery case 210 may accommodate the electrode assembly 260 thereinside. The pouch-type battery case 210 may be manufactured by molding a pouch film laminate. Since a detailed configuration and physical properties of the pouch film laminate are the same as described above, a specific description thereof will be omitted.

In order to manufacture the pouch-type battery case 210, the pouch film laminate is subjected to drawing-molding and stretching by punching or the like to form the cup portion 240 including a pocket-shaped receiving space 241 so as to receive the electrode assembly 260.

As illustrated in FIG. 3, the pouch-type battery case 210 may include an upper case and a lower case. In an embodiment, the lower case may have the cup portion 240 to include the receiving space 241 capable of receiving the electrode assembly 260, and the upper case may cover the receiving space 241 from the above to prevent the electrode assembly 260 from being separated to the outside of the battery case 210. The upper and lower cases may be manufactured by being connected to each other on one side, but are not limited thereto, and may be manufactured in various ways, such as being separated from each other and separately manufactured. Accordingly, a sealing portion may be formed on three sides, or may be formed on all four sides, and it may be possible that the cup portion is present only in the lower case.

The pouch-type battery case 210 may be sealed while accommodating the electrode assembly 260 such that a portion of the electrode lead 280, that is, a terminal portion, is exposed. Specifically, when the electrode lead 280 is connected to the electrode tab 270 of the electrode assembly 260, and the lead film 290 is formed in a portion of the electrode lead 280, the electrode assembly 260 may be received in the receiving space 241 provided in the cup portion 240 of the lower case, and the upper case may cover the receiving space 241 from the above. Subsequently, an electrolyte may be injected into the receiving space 241, and the terrace portion 250 formed at edges of the upper and lower cases may be sealed. The electrolyte is for moving lithium ions generated by an electrochemical reaction of an electrode during charging /discharging of the lithium secondary battery 200, and may include a non-aqueous organic electrolyte solution, which is a mixture of a lithium salt and an organic solvent or a polymer using a polymer electrolyte. Furthermore, the electrolyte may include a sulfide-based, oxide-based, or polymer-based solid electrolyte, and the solid electrolyte may have flexibility to be easily deformed by an external force.

The pouch-type battery case may be provided with a cup portion having a recessed shape to receive an electrode assembly, and a sealing portion formed along the circumference of the cup portion, wherein a solid fire extinguishing component may be included in a region excluding the sealing portion. That is, the sealing portion may be characterized by not including a fire extinguishing agent.

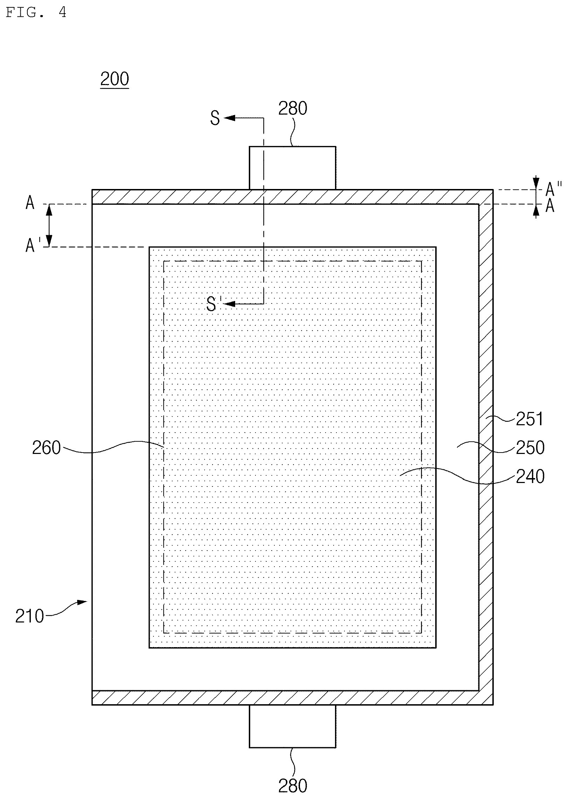

FIG. 4 is a plan view of the lithium secondary battery 200 including the pouch-type battery case 210 according to an embodiment of the present invention.

Referring to FIG. 4, a particle-type fire extinguishing agent (shaded portion) in the sealant layer may be formed in a region excluding the sealing portion 251, that is, part of the cup portion 240 and the terrace portion 250, and the particle-type fire extinguishing agent may not be included in the sealing portion 251. If the fire-extinguishing component in the sealant layer is also included in a portion to be sealed, the sealing temperature during sealing causes a fire-extinguishing action, resulting in increasing the sealing time, so that processibility may be deteriorated or sealability may be deteriorated.

The particle-type fire extinguishing agent may be included in the sealant layer corresponding to the cup portion spaced apart from the sealing portion by a width equal to or greater than a width A-A" of the sealing portion, and may be included from a portion spaced apart from the sealing portion by a gap of A-A' illustrated in FIG. 4. That is, the gap of A-A' may be greater than or equal to the width of A-A", and in this case, it is possible to provide a pouch-type battery case capable of maximizing the effect of a fire-extinguishing action without affecting the sealability.

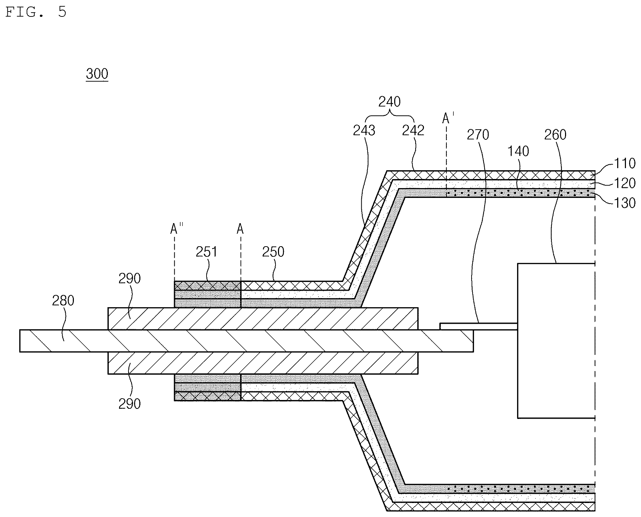

FIG. 5 is a cross-sectional view of a pouch-type battery case taken along line S-S' of FIG. 4. The cup portion 240 is provided with a flat portion 242 of a portion in which the electrode assembly is received, and an inclined portion 243 connected to the terrace portion 250 from the flat portion 242 and formed by molding, wherein part of all of the terrace portion 250 may be formed into the sealing portion 251 by sealing. The particle-type fire extinguishing agent may be included from the right side of line A of FIG. 5, and may preferably be included from a portion spaced apart by a gap of at least A and A". Accordingly, the solid fire extinguishing component may also be provided in the terrace portion 250, may also be provided in the inclined portion 243, and may also be provided in the flat portion 242, and may preferably be provided at least in the flat portion 242.

Hereinafter, referring to FIG. 3, the lithium secondary battery 200 is further described.

The electrode assembly 260 may be formed by alternately stacking an electrode and a separator. Specifically, the electrode assembly 260 may be formed in a predetermined shape by applying a slurry obtained by mixing an electrode active material, a binder and/or a conductive material to a positive electrode current collector and a negative electrode current collector, thereby manufacturing a positive electrode and a negative electrode, and stacking the positive electrode and the negative electrode respectively on both sides of a separator. The electrode assembly 260 may be inserted into the pouch-type battery case 210, and then the pouch-type case 210 is sealed after injecting an electrolyte thereto. In an embodiment, types of the electrode assembly 260 may include a stack type, a jelly-roll type, a stack and fold type, and the like, but are not limited thereto.

The electrode assembly 260 may include two types of electrodes, a positive electrode and a negative electrode, and a separator interposed between the electrodes to insulate the electrodes from each other. The positive electrode and the negative electrode may each have a structure in which an active material slurry is applied to an electrode current collector in the form of metal foil or metal mesh including aluminum and copper. A slurry may typically be formed by stirring a granular active material, an auxiliary conductor, a binder, a conductive material, and the like in a state in which a solvent is added. The solvent may be removed in a subsequent process.

The electrode tab 270 may be connected to each of the positive electrode and the negative electrode of the electrode assembly 260, and may protrude to the outside from the electrode assembly 260 to serve as a path through which electrons move between the inside and the outside of the electrode assembly 260. An electrode current collector of the electrode assembly 260 may be composed of a portion to which an electrode active material is applied to and a terminal portion to which the electrode active material is not applied, that is, an uncoated portion. The electrode tab 270 may be formed by cutting the uncoated portion or may be formed by connecting a separate conductive member to the uncoated portion by ultrasonic welding or the like. As illustrated in FIG. 3, the electrode tab 270 may protrude in different directions from the electrode assembly 260, but is not limited thereto, and may protrude in various directions such as protruding side by side in the same direction from one side thereof.

The electrode lead 280 may supply electricity to the outside of the secondary battery 200. The electrode lead 280 may be connected to the electrode tab 270 of the electrode assembly 260 by spot welding or the like. At least a portion of the electrode lead 280 may be surrounded by the lead film 290. In an embodiment, one end of the electrode lead 280 may be connected to the electrode tab 270 and the other end thereof may respectively protrude to the outside of the battery case 210. The electrode lead 280 may include a positive electrode lead 282 having one end connected to a positive electrode tab 272 and extending in a direction in which the positive electrode tab 272 protrudes, and a negative electrode lead 284 having one end connected to a negative electrode tab 274 and extending in a direction in which the negative electrode tab 274 protrudes.

Both the positive electrode lead 282 and the negative electrode lead 284 may protrude to the outside of the pouch-type battery case 210. Therefore, electricity generated inside the electrode assembly 260 may be supplied to the outside. In addition, since the positive electrode tab 272 and the negative electrode tab 274 are each formed to protrude in various directions, the positive electrode lead 282 and the negative electrode lead 284 may also extend in various directions. In an embodiment, the positive electrode lead 282 and the negative electrode lead 284 may be made of different materials. That is, the positive electrode lead 282 and the positive electrode current collector may be made of the same material, which is aluminum (Al), and the negative electrode lead 284 and the negative electrode current collector may be made of the same material, which is copper (Cu) or copper coated with nickel (Ni). A portion of the electrode lead 280 protruding to the outside of the battery case 210 may become a terminal portion and be electrically connected to an external terminal.

### Examples and Comparative Examples

Hereinafter, the present invention will be described in more detail with reference to specific examples. However, the following examples are for illustrative purposes only to facilitate the understanding of the present invention, and do not limit the scope of the present invention. It will be apparent to those skilled in the art that various changes and modifications can be made without departing from the scope and spirit of the invention, and it is obvious that such variations and modifications are within the scope of the appended claims.

### Example 1

On one surface of an aluminum alloy thin film having a width of 266 mm, a length of 50 m, and a thickness of 60 µm, a polyethyleneterephthalate film having a width of 266 mm, a length of 50 m, and a thickness of 12 µm and a nylon film having a width of 266 mm, a length of 50 m, and a thickness of 25 µm were stacked, and on the other surface thereof, cast polypropylene (CPP) having a width of 266 mm, a length of 50 m, and a thickness of 50 µm was stacked to manufacture a pouch film laminate having a structure of polyethyleneterephthalate/nylon/aluminum alloy thin film/cast polypropylene.

At this time, the cast polypropylene was injected with NaHCO₃ having an average particle diameter (D₅₀) of about 0.7 µm, which corresponds to 30 wt% based on the total weight thereof, during extrusion such that a fire-extinguishing component was included therein.

Here, the polyethyleneterephthalate and the nylon were a base layer, the aluminum alloy thin film was a gas barrier layer, and the cast polypropylene was the sealant layer.

The manufactured pouch film laminate was mounted on a two-cup molding apparatus provided with a die and a punch, and then subjected to drawing molding by lowering the punch with a pressure of 0.5 MPa and a rate of 20 mm/min such that a molding depth was 9.6 mm to manufacture a pouch-type battery case.

### Example 2

A pouch-type battery case was manufactured in the same manner as in Example 1, except that the cast polypropylene was injected with KHCO₃ having an average particle diameter (D₅₀) of about 0.7 µm, which corresponds to 30 wt% based on the total weight thereof, during extrusion.

### Example 3

A pouch-type battery case was manufactured in the same manner as in Example 1, except that in addition to the cast polypropylene, polyethyleneterephthalate was also injected with NaHCO₃ having an average particle diameter (D₅₀) of about 0.7 µm, which corresponds to 30 wt% based on the total weight thereof, during extrusion such that a fire-extinguishing component was included in a polyethylene terephthalate layer and a cast polypropylene layer.

### Comparative Example 1

A pouch-type battery case was manufactured in the same manner as in Example 1, except that a fire extinguishing component was not included in the cast polypropylene.

### Comparative Example 2

A pouch-type battery case was manufactured in the same manner as in Example 1, except that a fire extinguishing component was not included in the cast polypropylene but included only in the polyethyleneterephthalate.

### Comparative Example 3

A pouch-type battery case was manufactured in the same manner as in Example 1, except that NaHCO₃ was injected into a capsule having a diameter of about 10 µm, and the capsule was used to dispose a fire extinguishing layer having a thickness of about 50 µm between the nylon and the aluminum alloy thin film to manufacture a pouch film laminate.

### Comparative Example 4

A pouch-type battery case was manufactured in the same manner as in Example 1, except that NaHCO₃ was injected into a capsule having a diameter of about 10 µm, and the capsule was used to dispose a fire extinguishing layer having a thickness of about 50 µm between the aluminum alloy thin film and the cast polypropylene to manufacture a pouch film laminate.

### Experimental Example 1

The pouch-type battery cases manufactured in Examples and Comparative Examples were applied to a lithium secondary battery below and evaluated as follows, and the results are shown in Table 1. Here, the experimental results are shown in Table 1 below. At this time, in Table 1, the "⊚" mark indicates very good, the "O" mark indicates good, the "△" mark indicates average, and the "X" mark indicates poor.

### Manufacturing of lithium secondary battery

A positive electrode active material (NCM65 1520), a conductive material (Li-435), and a PVDF binder (KF9700, Ad-c01) were mixed at a weight ratio of 96.5 : 1.5 : 2.0 in N-methylpyrrolidone to prepare a positive electrode slurry, and the positive electrode slurry was applied on one surface of an aluminum current collector, dried at 140 °C, and then roll-pressed to manufacture a positive electrode.

In the case of a negative electrode, a negative electrode active material in which natural graphite and artificial graphite were mixed at a ratio of 5:5, a conductive material, and a binder were mixed at a weight ratio of 95.6 : 0.9 : 3.4 to prepare a slurry, and the slurry was applied on a copper current collector, and then dried and roll-pressed to manufacture the negative electrode.

A separator was interposed between the positive electrode and the negative electrode, which were respectively manufactured by the above-described methods, to manufacture an electrode assembly, and then the electrode assembly was placed inside the battery case of each of Examples and Comparative Examples, followed by injecting an electrolyte solution to the battery case to manufacture a battery cell. The electrolyte solution was prepared by dissolving LiPF6 with a concentration of 0.7 M in a mixed organic solvent in which ethylene carbonate (EC) : propylene carbonate (PC) : ethylmethylcarbonate (EMC) were mixed at 2: 1: 7 by volume.
1) Fire outbreak test: Five of the battery cells manufactured above were made into one module, and a heating pad was attached to one of the battery cells to apply heat at a rate of 0.5 °C/sec. Whether there was ignition in the battery cell to which the heating pad was attached was observed. At this time, the longer the delay in the time of first occurrence of ignition (fire or smoke), the better it is, and the results were evaluated in four stages.
2) Thermal propagation delay test: Five of the battery cells manufactured above were made into one module, and heat was applied to one of the battery cells at a rate of 0.5 °C/sec using a heating pad. Heat to an adjacent cell was measured by using a thermocouple to confirm whether there was a delay in time for thermal propagation, and the results were evaluated in four stages.
3) Penetration test: A sharp nail type was used to penetrate the battery cell manufactured above at a rate of 0.1 mm/s to conduct a nail penetration experiment, and the time of initial ignition, the size of flame during ignition, and the amount of smoke were evaluated in four stages.
4) Moldability: In performing drawing-molding to allow a molding depth to be 9.6 mm when manufacturing the pouch-type battery case, whether there were cracks in a pouch film was confirmed. Specifically, a case in which cracks were not generated at all was evaluated as O, a case in which cracks were generated in the base layer on the surface was evaluated as △, and a case in which the gas barrier layer was exposed or damaged to be cut due to the generation of cracks was evaluated as X.
5) Swelling stability: The lithium secondary battery was driven for 200 cycles, and then a change in the thickness of the lithium secondary battery was measured to evaluate a case in which the rate of change in the thickness was greater than 5% as O and a case in which the rate of change in the thickness was 5% or less as X.

**[Table 1]**

| | Fire outbreak test | Thermal propagation delay test | Penetration test | Moldability | Swelling Stability |
|---|---|---|---|---|---|
| Example 1 | ○ | ○ | ○ | ○ | ○ |
| Example 2 | ○ | ○ | ○ | ○ | ○ |
| Example 3 | ○ | ⊚ | ○ | ○ | ○ |
| Comparative Example 1 | Δ | X | Δ | ○ | ○ |
| Comparative Example 2 | Δ | Δ | ○ | ○ | ○ |
| Comparative | Δ | Δ | ○ | Δ | X |
| Example 3 | | | | | |
| Comparative Example 4 | ○ | ○ | ○ | Δ | X |

Referring to Table 1 above, it can be confirmed that Examples exhibit excellent safety in terms of fire outbreak and thermal propagation due to energy accumulation compared to Comparative Examples, and do not affect the performance of a battery as well as moldability. On the other hand, it can be confirmed that Comparative Example 1 does not include a fire extinguishing component, and thus, is significantly unstable in terms of fire or explosion safety, and particularly, has a high risk of explosion due to rapid thermal propagation. In addition, it can be confirmed that if a fire extinguishing component is positioned on an outer side of the pouch rather than the gas barrier layer as in Comparative Example 2, the same result is obtained in the nail penetration test, which is an abnormal phenomenon caused by an external impact, but the effect of the fire extinguishing component is small in terms of fire outbreak and thermal propagation. In addition, in Comparative Examples 3 and 4 in which a separate fire extinguishing agent layer is formed through capsule formation, cracks were generated at corner portions of the cup portion during molding due to an increase in the thickness of the pouch. Furthermore, it can be confirmed that if a gas is generated inside the pouch, swelling should be allowed to a certain extent by a predetermined thickness allowed by a gap between a cell and a cell in the battery pack to reduce stress applied on the electrode assembly and prevent the resulting performance degradation, but in the case of Comparative Examples 3 and 4, swelling is not allowed due to an increase in the thickness of the pouch, so that there is a problem in that stress applied on the electrode assembly inside the pouch is large.

### [Description of the Reference Numerals or Symbols]

100, 210: Pouch-type battery case
110: Base layer 120: Gas barrier layer
130: Sealant layer 131: First sealant layer
132: Second sealant layer 140: Particle-type fire extinguishing agent
200: Lithium secondary battery
240: Cup portion 241: Receiving space
242: Flat portion 243: Inclined portion
250: Terrace portion 251: Sealing portion
260: Electrode assembly 270: Electrode tab
280: Electrode lead 290: Lead film

## Claims

1. A pouch-type battery case comprising a base layer, a gas barrier layer, and a sealant layer which are sequentially stacked,
wherein the sealant layer comprises a particle-type fire extinguishing agent, wherein the particle-type fire extinguishing agent includes one or more selected from the group consisting of a first fire extinguishing component containing sodium hydrogen carbonate, a second fire extinguishing component containing calcium hydrogen carbonate, a third fire extinguishing component containing ammonium phosphate, and a fourth fire extinguishing component containing urea.

2. The pouch-type battery case of claim 1, wherein the particle-type fire extinguishing agent is included in an amount of 10 wt% to 90 wt% based on the total weight of the sealant layer.

3. The pouch-type battery case of claim 1, wherein the particle-type fire extinguishing agent has an average particle diameter D₅₀ of 1 µm or less.

4. The pouch-type battery case of claim 1, wherein the pouch-type battery case is provided with:
a cup portion having a recessed shape to receive an electrode assembly; and
a sealing portion formed along a circumference of the cup portion, wherein the particle-type fire extinguishing agent is included in a region excluding the sealing portion.

5. The pouch-type battery case of claim 4, wherein the particle-type fire extinguishing agent is included in the cup portion spaced apart from the sealing portion by a width equal to or greater than a width of the sealing portion.

6. The pouch-type battery case of claim 1, wherein the base layer has a multi-layered structure including two or more layers formed of different polymers from each other, and the particle-type fire extinguishing agent is further included in one or more layers selected from the multiple layers.

7. A lithium secondary battery comprising:
the pouch-type battery case of any one of claim 1 to claim 6; and
an electrode assembly accommodated inside the pouch-type battery case.
